# EUROPEAN PATENT SPECIFICATION

(11) **EP 3 920 637 B1**
(45) Date of publication and mention of the grant of the patent: **18.06.2025**
(21) Application number: 19914143.3
(22) Date of filing: 01.02.2019
(51) Int. Cl.: H04W 74/0836

(54) **TERMINAL, SYSTEM AND COMMUNICATION METHOD**
TERMINAL, SYSTEM UND KOMMUNIKATIONSMETHODE
TERMINAL, SYSTÈME ET PROCÉDÉ DE COMMUNICATION

(43) Date of publication of application: 08.12.2021
(73) Proprietor: NTT DOCOMO, INC., Chiyoda-Ku Tokyo 100-6150 (JP)
(72) Inventor: UCHINO, Tooru, Tokyo 100-6150 (JP); TAKAHASHI, Hideaki, Tokyo 100-6150 (JP)
(74) Representative: Hoffmann Eitle
(86) International application number: PCT/JP2019/003742
(87) International publication number: WO 2020/157982

(56) References cited:
- US-A1- 2018 110 074
- NOKIA ET AL: "2-step RACH resource assignment and fall-back operation for NR- U", vol. RAN WG2, no. Spokane, USA; 20181112 - 20181116, 12 November 2018 (2018-11-12), XP051556734, Retrieved from the Internet <URL:http://www.3gpp.org/ftp/Meetings%5F3GPP%5FSYNC/RAN2/Docs/R2%2D1817192%2Ezip> [retrieved on 20181112]
- INTEL CORPORATION: "2-Step random access procedure in NR", vol. RAN WG2, no. Reno, Nevada, USA; 20161114 - 20161118, 13 November 2016 (2016-11-13), XP051178101, Retrieved from the Internet <URL:http://www.3gpp.org/ftp/Meetings_3GPP_SYNC/RAN2/Docs/> [retrieved on 20161113]
- INTERDIGITAL COMMUNICATIONS: "Random Access Procedure", vol. RAN WG1, no. Reno, USA; 20161114 - 20161118, 13 November 2016 (2016-11-13), XP051176260, Retrieved from the Internet <URL:http://www.3gpp.org/ftp/Meetings_3GPP_SYNC/RAN1/Docs/> [retrieved on 20161113]
- MEDIATEK INC: "2-step RACH msgA and msgB contents", vol. RAN WG2, no. Spokane, US; 20181112 - 20181116, 12 November 2018 (2018-11-12), XP051556254, Retrieved from the Internet <URL:http://www.3gpp.org/ftp/Meetings%5F3GPP%5FSYNC/RAN2/Docs/R2%2D1816685%2Ezip> [retrieved on 20181112]
- MEDIATEK INC: "2-step RACH msgA and msgB contents", 3GPP TSG RAN WG2 #104 R2-1816685, 12 November 2018 (2018-11-12), XP051556254
- NOKIA ET AL.: "2-step RACH resource assignment and fall-back operation for NR-U", 3GPP TSG RAN WG2 #104 R2-1817192, 12 November 2018 (2018-11-12), XP051556734

## Description

### Technical Field

The present invention relates to a user equipment and a base station apparatus in a wireless communication system.

### Background Art

In NR (New Radio) (also referred to as "5G"), which is the successor system of LTE (Long Term Evolution), techniques for satisfying, as required conditions, large capacity system, high data transmission speed, low delay, simultaneous connection of many terminals, low cost, power saving, and the like are being discussed (for example, see Non-Patent Document 1).

In NR, random access is executed for synchronization establishment or scheduling request between a user equipment and a base station apparatus in a manner similar to LTE. There are two types of random access procedures: contention based random access (CBRA) and contention free random access (CFRA) (for example, see Non-Patent Document 2).

### Prior Art Document

### Non-Patent Document

Non-Patent Document 1: 3GPP TS 38.300 V15.4.0 (2018-12)
Non-Patent Document 2: 3GPP TS 38.321 V15.4.0 (2018-12)
INTEL CORPORATION: "2-Step random access procedure in NR", 3GPP DRAFT; R2-168520_5G_2-STEP RA_V00, describes a 2-Step random access procedure in NR.
INTERDIGITAL COMMUNICATIONS: "Random Access Procedure", 3GPP DRAFT; R1 -1612311, describes Random Access Procedure.
MEDIATEK INC: "2-step RACH msgA and msgB contents", 3GPP DRAFT; R2-1816685 2-STEP RACH MSGA AND MSGB CONTENTS, describes 2-step RACH msgA and msgB contents.
US 2018/110074 A1 describes a method, an apparatus, and a computer-readable medium for a random access channel (RACH) procedure at a user equipment. For example, the method may select a two-step RACH procedure or a four-step RACH procedure at the UE based at least on RACH configuration information received from a base station or the RACH configuration information at the UE. The example method may further include transmitting, from the UE, one or more messages associated with the two-step RACH procedure or the four-step RACH procedure based on the selection.

### Summary of the Invention

### Problem to be Solved by the Invention

In the NR-based wireless communication system, a 2-step random access procedure is being studied in addition to a conventional 4-step random access procedure. The 2-step random access procedure takes less time to complete the random access procedure than the 4-step random access procedure, but the user equipment must transmit a payload first in addition to a preamble, and therefore, depending on radio quality, communication cannot be performed.

The present invention has been made in view of the above issues, and it is an object of the present invention to execute a suitable random access procedure according to a situation.

### Means for Solving Problem

The above problem is solved by the subject matter of the independent claims. Examples and technical descriptions of apparatuses, products and/or methods in the description and/or drawings which are not covered by the claims are presented not as embodiments of the invention but as background art or examples useful for understanding the invention.

### Effect of the Invention

According to the disclosed technique, efficiency of a random access procedure can be improved based on information about a performed random access procedure.

### Brief Description of Drawings

FIG. 1 is a drawing for explaining a wireless communication system according to an embodiment of the present invention;
FIG. 2 is a sequence diagram for explaining example (1) of a random access procedure;
FIG. 3 is a sequence diagram for explaining example (2) of a random access procedure;
FIG. 4 is a sequence diagram for explaining an example of a 4-step random access procedure;
FIG. 5 is a sequence diagram for explaining an example of a 2-step random access procedure;
FIG. 6 is a flowchart for explaining an example (1) of a random access procedure according to an embodiment of the present invention;
FIG. 7 is a flowchart for explaining an example (2) of a random access procedure according to an embodiment of the present invention;
FIG. 8 is a flowchart for explaining an example (3) of a random access procedure according to an embodiment of the present invention;
FIG. 9 is a drawing illustrating an example of a functional configuration of a base station apparatus 10 according to an embodiment of the present invention;
FIG. 10 is a drawing illustrating an example of a functional configuration of a user equipment 20 according to an embodiment of the present invention; and
FIG. 11 is a drawing illustrating an example of a hardware configuration of a base station apparatus 10 or a user equipment 20 according to an embodiment of the present invention.

### Mode for Carrying Out the Invention

An embodiment of the present invention will be hereinafter described with reference to drawings. The embodiment described below is an example, and the embodiment to which the present invention is applied is not limited to the following embodiment.

In operation of a wireless communication system according to embodiments of the present invention, existing techniques are used as appropriate. However, an example of existing technique includes an existing LTE, but is not limited to the existing LTE. In addition, the term "LTE" used in this specification has a broad meaning including LTE-Advanced and specifications newer than LTE-Advanced (e.g., NR) unless otherwise specified.

In the embodiments of the present invention described below, terms such as SS (Synchronization signal), PSS (Primary SS), SSS (Secondary SS), PBCH (Physical broadcast channel), PRACH (Physical random access channel), and the like used in the existing LTE are used. This is for convenience of description, and signals, functions, and the like may be referred to as other names. In NR, the above terms correspond to NR-SS, NR-PSS, NR-SSS, NR-PBCH, NR-PRACH, and the like. However, even when signals are used for NR, "NR-" is not necesarily attached thereto.

In the embodiments of the present invention, the duplex method may be a TDD (Time Division Duplex) system, an FDD (Frequency Division Duplex) system, or others (for example, Flexible Duplex and the like).

Further, in the embodiment of the present invention, "to configure" a radio parameter or the like may be that a predetermined value is configured in advance (Pre-configure), or that a radio parameter indicated by a base station apparatus 10 or a user equipment 20 is configured.

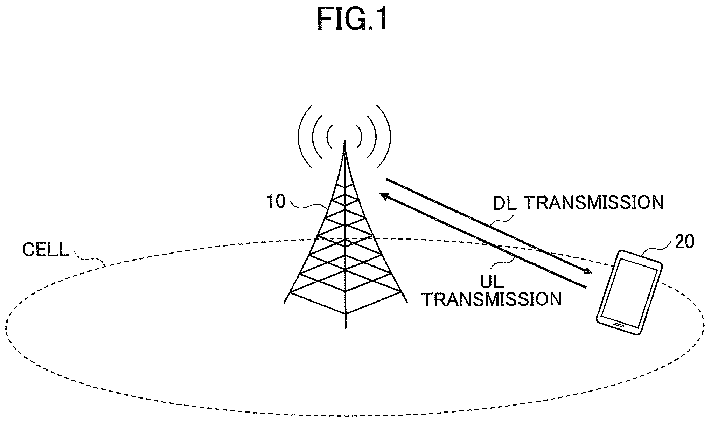

FIG. 1 is a drawing for explaining a wireless communication system according to an embodiment of the present invention. As illustrated in FIG. 1, a wireless communication system according to an embodiment of the present invention includes a base station apparatus 10 and a user equipment 20. In FIG. 1, one base station apparatus 10 and one user equipment 20 are illustrated, but this is only an example. Alternatively, a plurality of base station apparatuses 10 and user equipments 20 may be provided.

The base station apparatus 10 provides one or more cells, and is a communication apparatus wirelessly communicating with the user equipment 20. The physical resource of a radio signal is defined by time domain and frequency domain. Time domain may be defined by OFDM symbol number. Frequency domain may be defined by the number of subcarriers or the number of resource blocks. The base station apparatus 10 transmits a synchronization signal and system information to the user equipment 20. The synchronization signal is, for example, NR-PSS and NR-SSS. The system information is transmitted in, for example, NR-PBCH, and is also referred to as broadcast information. As illustrated in FIG. 1, the base station apparatus 10 transmits a control signal or data to the user equipment 20 through DL (Downlink), and receives a control signal or data from the user equipment 20 through UL (Uplink). Both the base station apparatus 10 and the user equipment 20 can transmit and receive signals by performing beamforming. In addition, both the base station apparatus 10 and the user equipment 20 can apply communication by MIMO (Multiple Input Multiple Output) to DL or UL. Further, both the base station apparatus 10 and the user equipment 20 may communicate via SCell (Secondary Cell) and PCell (Primary Cell) by CA (Carrier Aggregation).

The user equipment 20 is a communication apparatus equipped with a wireless communication function such as a smartphone, a mobile phone, a tablet, a wearable terminal, and a communication module for M2M (Machine-to-Machine). As illustrated in FIG. 1, the user equipment 20 receives control signals or data from the base station apparatus 10 in DL, and transmits control signals or data to the base station apparatus 10 in UL, thereby using various communication services provided by the wireless communication system.

In the random access procedure executed for establishing synchronization between the user equipment 20 and the base station apparatus 10 or a scheduling request, for example, the user equipment 20 transmits, as a UL signal, a random access preamble or a UE (User Equipment) identifier to the base station apparatus 10, and the base station apparatus 10 transmits, as a DL signal, a random access response and information for performing contention resolution to the user equipment 20.

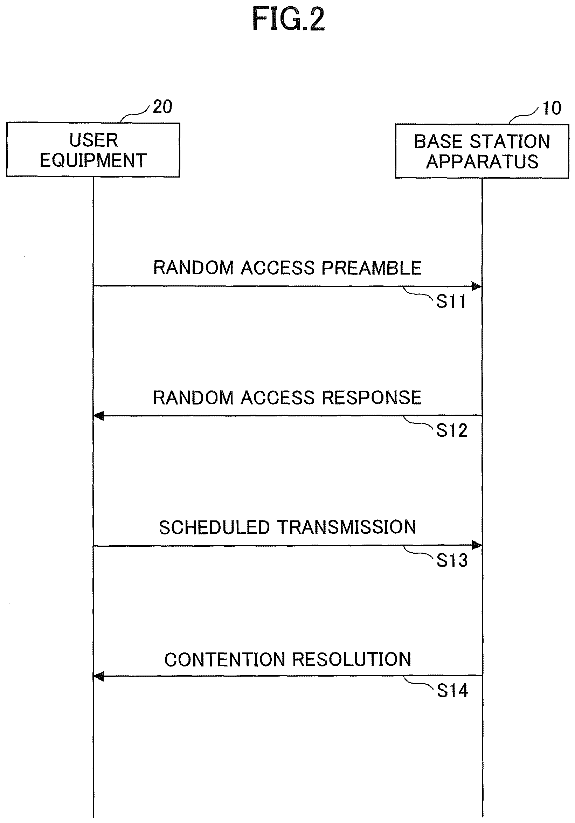

FIG. 2 is a sequence diagram for explaining an example (1) of a random access procedure. An example of random access procedure illustrated in FIG. 2 is a contention based random access. When the contention based random access is started, the user equipment 20 transmits a random access preamble to the base station apparatus 10 in step S11. Subsequently, the base station apparatus 10 transmits a random access response to the user equipment 20 (S12). Subsequently, the user equipment 20 transmits a scheduled transmission in a random access response to the base station apparatus 10 (S13). In the scheduled transmission, information for identifying the user equipment 20 is transmitted. Subsequently, the base station apparatus 10 transmits information for performing contention resolution to the user equipment 20 (S14). When the contention resolution succeeds, the random access procedure is successfully completed.

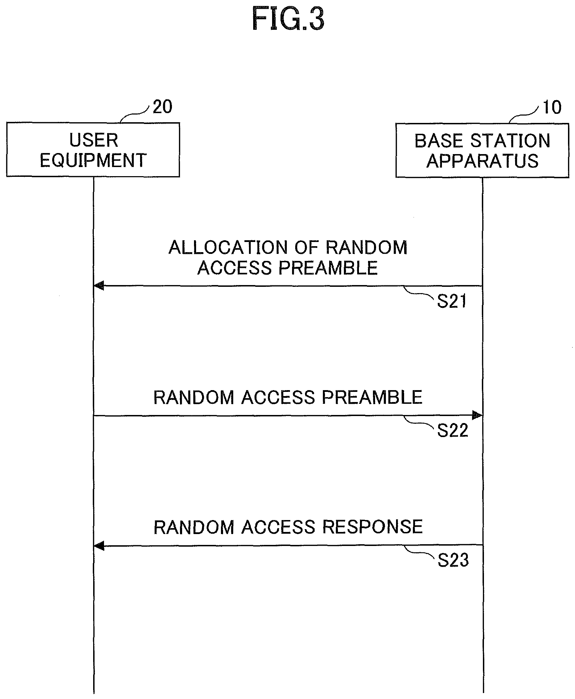

FIG. 3 is a sequence diagram for explaining an example (2) of a random access procedure. An example of random access procedure illustrated in FIG. 3 is a contention free random access procedure. When the contention free random access procedure is started, the base station apparatus 10 allocates a random access preamble for the user equipment 20 in step S21. Subsequently, the user equipment 20 transmits the allocated random access preamble to the base station apparatus 10 (S22). Subsequently, the base station apparatus 10 transmits a random access response to the user equipment 20.

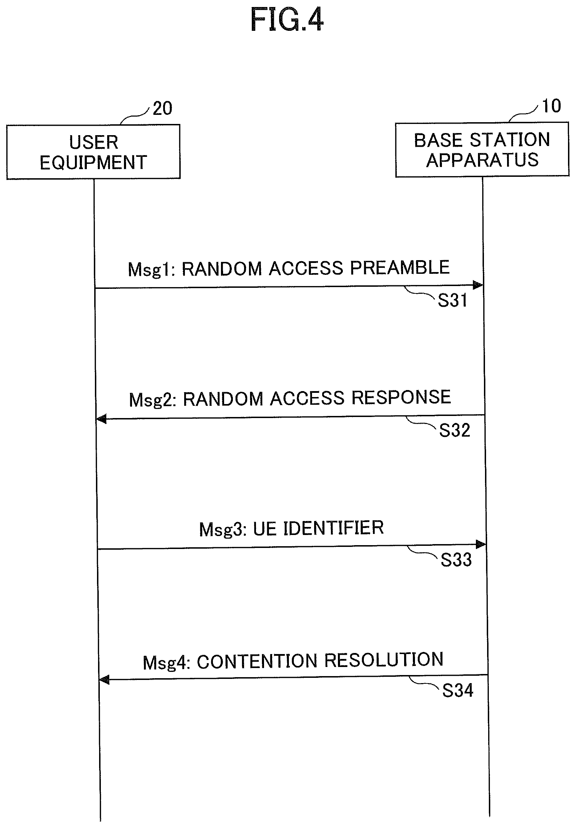

FIG. 4 is a sequence diagram for explaining an example of a 4-step random access procedure. An example of random access procedure illustrated in FIG. 4 is a contention based random access like FIG. 2, and is a 4-step random access procedure. In step S31, the user equipment 20 transmits, as Msg1, a random access preamble to the base station apparatus 10. Subsequently, the base station apparatus 10 transmits, as Msg2, a random access response to the user equipment 20 (S32). Subsequently, the user equipment 20 transmits, as Msg3, a UE identifier to the base station apparatus 10 (S33). Subsequently, the base station apparatus 10 transmits, as Msg4, information for performing contention resolution to the user equipment 20. When the contention resolution succeeds, the random access procedure is successfully completed.

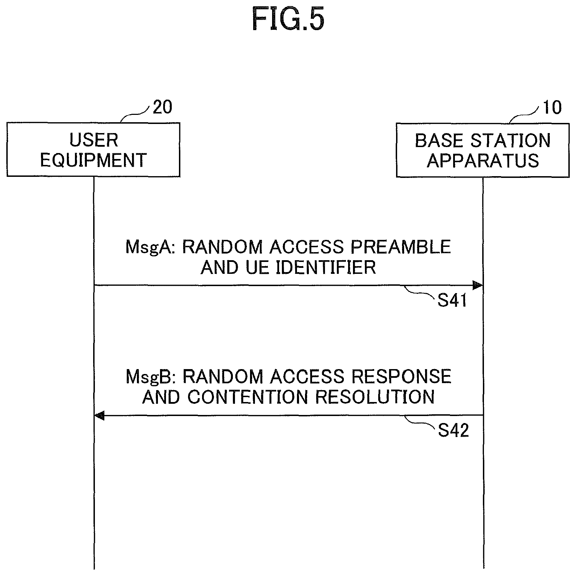

FIG. 5 is a sequence diagram for explaining an example of a 2-step random access procedure. An example of random access procedure illustrated in FIG. 5 is a contention based random access, and is a 2-step random access procedure. The 2-step random access procedure has been studied to complete a random access procedure in a shorter period of time. In step S41, the user equipment 20 transmits, as MsgA, a random access preamble and a UE identifier to the base station apparatus 10. Subsequently, the base station apparatus 10 transmits, as MsgB, a random access response and information for performing contention resolution to the user equipment 20 (S42). When a contention resolution succeeds, the random access procedure is successfully completed.

As compared with a case where Msg1 is transmitted in the 4-step random access procedure, MsgA in the 2-step random access procedure includes not only the random access preamble but also a payload, and therefore, depending on the radio quality, the base station apparatus 10 may not be able to receive MsgA. For this reason, there arises a necessity to switch from the 2-step random access preamble to the 4-step random access preamble. An operation for switching from the 2-step random access preamble to the 4-step random access preamble may be referred to as a fallback. It is required to appropriately execute a trigger timing of fallback, UE operation at the time of fallback, extension to the 4-step random access procedure after fallback, and the like. With a predetermined trigger, a fallback from the 2-step random access procedure to the 4-step random access procedure is executed.

Conversely, there may be a transition for switching from the 4-step random access procedure to the 2-step random access procedure. It is required to appropriately execute transition trigger timing to the 2-step random access procedure or control after the transition to the 2-step random access procedure.

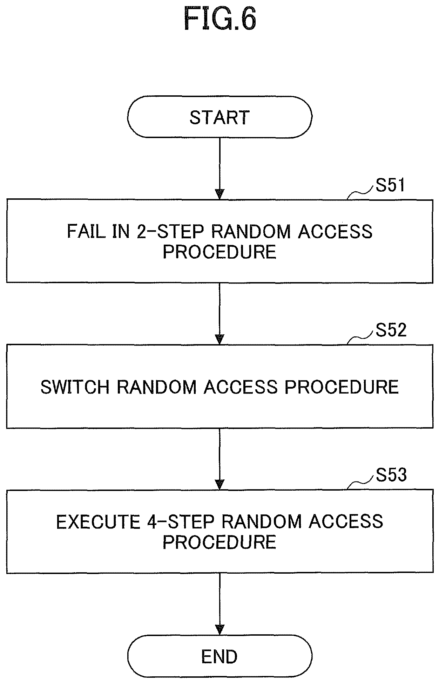

FIG. 6 is a flowchart for explaining an example (1) of a random access procedure according to an embodiment of the present invention. As illustrated in FIG. 6, in a case of the user equipment 20 failing the 2-step random access procedure in step S51, the user equipment 20 may switch the random access procedure (S52), and execute the 4-step random access procedure (S53). More specifically, a switch trigger from the 2-step random access procedure to the 4-step random access procedure is a failure of the 2-step random access procedure.

In step S51, a failure of the 2-step random access procedure may be detected, for example, in a case where MsgA is transmitted a predetermined number of times since the random access procedure is started. A failure of the 2-step random access procedure may be detected, for example, in a case where a random access procedure is not completed even after a predetermined period of time elapses since the random access procedure is started. In other words, a failure of random access procedure may be detected in a case where the user equipment 20 cannot receive MsgB addressed to the user equipment 20 even after a predetermined period of time elapses since the random access procedure is started.

In step S52, the user equipment 20 may receive a fallback instruction of random access procedure from the base station apparatus 10. For example, as an explicit indication of a fallback instruction, the fallback instruction may be received by way of broadcast information or individual signaling. For example, MsgB may include information indicating fallback instruction. For example, as an implicit indication of fallback instruction, conventional Msg2 may be received instead of MsgB.

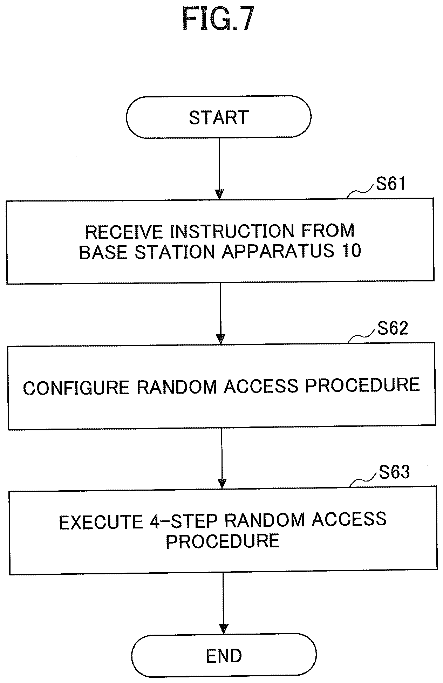

FIG. 7 is a flowchart for explaining an example (2) of a random access procedure according to an embodiment of the present invention. Before the random access procedure is started, the user equipment 20 may receive an instruction for performing fallback from the base station apparatus 10. More specifically, a switch trigger from the 2-step random access procedure to the 4-step random access procedure is an instruction from the base station apparatus 10.

In step S61, the user equipment 20 receives an instruction for performing fallback from the 2-step random access procedure to the 4-step random access procedure. Subsequently, the user equipment 20 configures the random access procedure based on the instruction (S62), and executes the 4-step random access procedure (S63). For example, 4-step random access procedure may be instructed for a subsequently activated random access procedure in RRC (Radio Resource Control) connection release, RRC connection suspend, RRC connection change with redirection, random access for handover command (reconfigurationWithSync message), and L1 signal (PDCCH and the like) such as MAC control signal (MAC CE). "Subsequently activated random access procedure" is started in response to, for example, RRC connection request, RRC connection resume, random access for handover or SCG change (reconfigurationWithSync), and the like. In addition: whether or not fallback is performed; and which one of 2-step random access procedure and 4-step random access procedure is performed first (2-step first and thereafter 4-step, or 4-step first and thereafter 2-step), may be indicated to the user equipment 20. Further, even if an instruction is once indicated to the user equipment 20, if, thereafter, another instruction is indicated to the user equipment 20 again, the user equipment may follow the latter instruction. Whether to follow an instruction may be determined from the timing when the user equipment 20 receives the instruction in terms of time, or may be determined by a cell, CC, BWP or signal type (for example, L1 signal, RRC signal, MAC signal), and the like, in which an instruction is given.

The switch trigger from 2-step random access procedure to 4-step random access procedure may be a case where high-priority processes are in contention. For example, in a case where an RRC connection request occurs while RRC connection re-establishment or RRC connection resume is executed, the user equipment 20 may fall back to 4-step random access procedure.

A switch trigger from 2-step random access procedure to 4-step random access procedure may be a case where radio quality is degraded. For example, in a case of RSRP (Reference Signal Received Power), RSRQ (Reference Signal Received Quality), SINR (Signal-to-Interference plus Noise power Ratio), CQI (Channel Quality Indicator) or a path loss value falling below a predetermined value, or the amount of change exceeding a predetermined value, the user equipment 20 may fall back to 4-step random access procedure. Temporal hysteresis may be applied to measurements for detecting radio quality degradation. The switch trigger from 2-step random access procedure to 4-step random access procedure is not limited to information about radio quality, but can also be information about congestion (for example, channel usage rate, resource allocation frequency, instantaneous allocation resource number, average allocation resource number, or the like).
Parameters used for threshold value for determining switch trigger based on information on radio quality or information on congestion degree may be indicated by an RRC message or broadcast information. Measurement of radio quality information or congestion level information may be performed in cell units, BWP units, or resource block units. Parameters used for threshold values for determining the switch trigger based on information about radio quality or information about congestion degree may be indicated by an RRC message or broadcast information. The information about radio quality or the information about congestion degree may be measured in any of units of cells, units of BWPs, or units of resource blocks.

In a case where fallback to 4-step random access is triggered, controls of the following (1) to (4) are executed, in accordance with the claimed embodiment.
(1) The user equipment 20 stops current random access procedure. The stop of the random access procedure may be carried out by resetting MAC (Medium Access Control).
(2) Data to be transmitted in Msg3 may be restructured. In a case where TBSs (Transport Block Sizes) assumed in MsgB and Msg3 are different, a MAC PDU (Protocol Data Unit) may be generated again even for information wirelessly transmitted in MsgA. The MAC PDU may be generated based on data such as, for example, MAC CE (Control Element), CCCH SDU (Common control channel service data unit), particular QoS (Quality of Service), and the like. The particular QoS includes, for example, high priority data such as URLLC (Ultra Reliable Low Latency Communications) or voice.
(3) A timer of layer 3, and a counter and timer for random access in the MAC layer may be maintained. Each timer or counter may have different settings for maintaining, stopping, resetting, or initializing.
(4) Resources (for example, frequency, time, preamble, identifier (for example, RNTI)) used for random access procedure after fallback may be designated. Resources may be explicitly indicated or implicitly indicated by the base station apparatus 10. In a case where the resources are explicitly indicated, information indicating the resources may be included in the fallback indication or may be indicated in advance. In a case where the resources are indicated implicitly, the resources may be determined from the time information at which the fallback occurs.

Note that in a case where the user equipment 20 performs a fallback from 2-step random access procedure to 4-step random access procedure, the user equipment 20 may indicate, to the network, that the fallback has occurred. Based on the indication, the network can adjust the wireless parameters and reduce the delay. The user equipment 20 may indicate, to the base station apparatus 10, the fallback during execution of the 4-step random access procedure into which the user equipment 20 has fallen back. For example, indications may be given as in the following (1) to (5).

(1) The cause of fallback may be indicated. Examples of causes of fallback include exceeding of MsgA retransmission number, reception of fallback instructions, degradation of radio quality, and the like.
(2) Information about a cell, carrier, or BWP (Bandwidth part) in which the 2-step random access procedure has been executed may be indicated.
(3) The indication may be a signal in any layer such as an RRC signal, a MAC control signal, and an L1 signal.
(4) Only in particular cases, occurrence of fallback may be indicated to the network. Examples of particular cases include a case where an instruction is given by the base station apparatus 10, or a case where there is unoccupied capacity in the Msg3, equal to or more than a predetermined amount.
(5) A signal for indicating fallback may take precedence over other signals. The signal for indicating fallback may take precedence over, for example, data other than CCCH SDU, and MAC CE other than C-RNTI (Cell-Radio network temporary identifier) MAC CE.

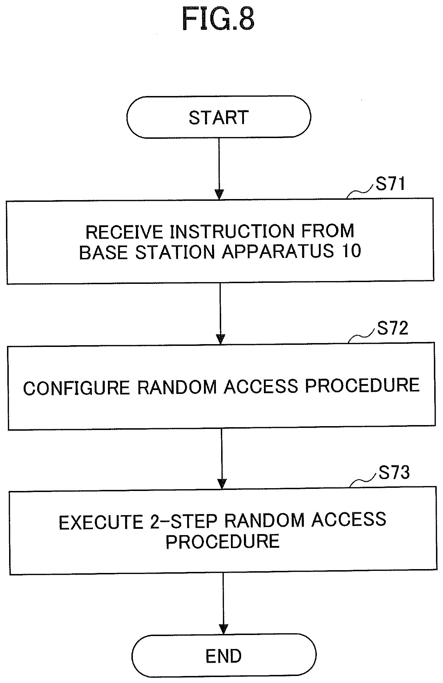

FIG. 8 is a flowchart for explaining an example (3) of a random access procedure according to an embodiment of the present invention. Before the start of the random access procedure or during execution of the random access procedure, the user equipment 20 may receive an instruction for performing 2-step random access procedure from the base station apparatus 10. In other words, a switch trigger from 4-step random access procedure to 2-step random access procedure is an instruction from the base station apparatus 10.

In step S71, the user equipment 20 receives an instruction for setting 2-step random access procedure. Subsequently, the user equipment 20 sets a random access procedure based on the instruction (S72), and executes 2-step random access procedure (S73).

In step S71, the user equipment 20 may receive, for example, as an explicit indication, an instruction of 2-step random access procedure from the base station apparatus 10 via broadcast information or individual signaling. For example, Msg2 may include information indicating an instruction for changing to 2-step random access procedure. For example, instead of Msg2, MsgB may be received as an implicit indication of an instruction for changing to 2-step random access procedure.

A switch trigger from 4-step random access procedure to 2-step random access procedure may be a case where particular data occurs in the user equipment 20. The particular data may be, for example, CCCH SDU, DCCH (Dedicated control channel) in which SRB (Signaling radio bearer) data is transmitted, or data such as particular QoS. The particular QoS includes, for example, high priority data such as URLLC or voice.

The transition to 2-step random access procedure may be performed only when 4-step random access procedure fails in a case where 4-step random access procedure is currently being executed.

The transition to 2-step random access procedure may be performed only when a particular condition is satisfied. The particular condition is that in a case where, for example, radio quality such as RSRP, RSRQ, SINR, CQI, or path loss value exceeds a predetermined value, the user equipment 20 may transition to 2-step random access procedure.

Note that when the user equipment 20 transitions from the 4-step random access procedure to the 2-step random access procedure, the user equipment 20 may indicate a trigger or a cause of the transition to the network. For example, the indication may be provided as in the following (1) to (4). The indication may be a signal in any layer such as an RRC signal, a MAC control signal, and an L1 signal.

(1) Particular data (CCCH SDU, DCCH, particular QoS) occurs.
(2) Transition for which an instruction is given from the network.
(3) Transition for which an instruction is not given from the network.
(4) There is room in the TBS.

A message indicated above may be discarded in response to the following (1) to (11) as a trigger.
(1) Completion of random access procedure
(2) Finish of timing alignment timer
(3) Elapse of a predetermined period of time since message is generated
(4) Elapse of a predetermined period of time since transition occurs
(5) Elapse of a predetermined period of time since a trigger of transition is detected
(6) Failure of random access procedure
(7) Further failure of random access procedure
(8) Another random access procedure (for example, from the network) is started
(9) Instruction from the base station apparatus 10
(10) Reset of MAC
(11) ReconfigurationWithSync, re-connection, transition to IDLE, RRC INACTIVE, or the like

Switching from 2-step random access procedure to 4-step random access procedure or from 4-step random access procedure to 2-step random access procedure may be executed during the same random access procedure, or a random access procedure may be redone from the beginning every time a switch occurs. At which timing a switching is performed may be designated from the base station apparatus 10, or may be autonomously selected by the user equipment 20. For example, in a case where the number of transmissions of random access preambles or MsgA has reached a predetermined value, the random access procedure may be continued at a time of switching, or in a case where the predetermined value has not yet been reached, a random access procedure may be redone from the beginning at a time of switching. In a case where a random access procedure is redone from the beginning at a time of switching, a part of control may be taken over. The part of control is, for example, a transmission power of a random access preamble or MsgA.

In a case where, with regard to the number of transmission of MsgA, MsgA is transmitted as a preamble and a payload (information corresponding to UE identifier or CCCH SDU), the number of transmissions of the preamble and the payload may be commonly counted, the number of transmissions of each of the preamble and the payload may be individually counted, or the number of transmissions of only one of the preamble and the payload may be counted. Each of repetition transmissions (for example, repetition transmission) in layer 1 may be counted as one for the number of transmissions in layer 1, or the number of transmissions may be counted in the MAC layer. A period of time taken for transmission such as a slot, an OFDM symbol, a sub-frame, or a radio frame used for transmission of random access preamble or MsgA may be counted instead of the number of transmissions. Both of the number of transmissions and a period of time taken for transmission may be counted, and in a case where any one of or both of them exceeds a predetermined value, switching of random access procedure may be performed.

Note that the user equipment 20 may indicate, to the base station apparatus 10, that 2-step random access procedure is supported. The indication may be sent via an RRC message, or may be indicated implicitly by using a RACH resource corresponding to 2-step random access procedure. In addition, the indication may be executed by the user equipment 20 only when the base station apparatus 10 permits an indication.

After switching from 2-step random access procedure to 4-step random access procedure, or switching from 4-step random access procedure to 2-step random access procedure, the user equipment 20 may indicate information shown in the following (1) to (5) to the base station apparatus 10.
(1) Information about a cell, a component carrier, or a BWP in which a random access procedure was executed before the switching, i.e., PCI (Physical Cell Identifier), BWP-id, identifier of a frequency position, or the like, of SSB (Synchronization Signal Block).
(2) Information about transmission settings with which a random access procedure was executed before the switching, i.e., quality information such as RSRP, RSRQ, SINR, CSI, or path loss value, or transmission power information.
(3) Information about a random access preamble that was executing random access procedure before switching, i.e., a preamble index, a position of a preamble in time domain, and a position of a preamble in frequency domain.
(4) A time it took to perform switching, i.e., a time since a random access procedure is triggered, or a time since transmission of the first random access preamble. The unit of time may be in milliseconds, seconds, slots, symbols, or the like.
(5) The number of switching times.

A priority may be given to an indication of information shown in the above (1) to (5). For example, (2) or (3), which the network can use for parameter adjustment, may be preferentially indicated. In addition, in a case where an indication does not fit in a message (for example, RRC message, TB) used for indication of the information shown in the above (1) to (5), the indication of low priority data may be omitted. The omitted data may not be indicated, or the indication may be suspended and indicated by a subsequent UL transmission, or the user equipment 20 may indicate the omission to the base station apparatus 10.

According to the above embodiment, the user equipment 20 can fall back from 2-step random access procedure to 4-step random access procedure based on the set trigger. Also, the user equipment 20 can transition from 4-step random access procedure to 2-step random access procedure based on the set trigger. Thus, the random access procedure can be completed quickly by executing the random access procedure according to the communication status.

That is, a suitable random access procedure can be executed according to a situation.

### <Apparatus configuration>

Next, an example of functional configuration of the base station apparatus 10 and the user equipment 20 that execute the processing and operations described so far will be described. The base station apparatus 10 and the user equipment 20 include a function for implementing the above-described embodiment. However, each of the base station apparatus 10 and the user equipment 20 may have only some of the functions in the embodiment.

### <Base station apparatus 10>

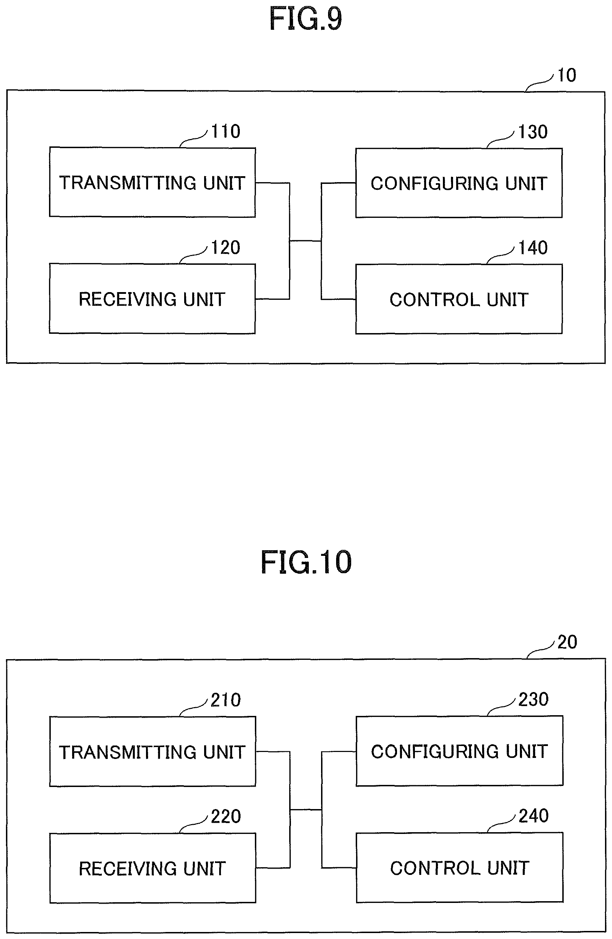

FIG. 9 is a drawing illustrating an example of a functional configuration of the base station apparatus 10. As illustrated in FIG. 9, the base station apparatus 10 includes a transmitting unit 110, a receiving unit 120, a configuring unit 130, and a control unit 140. The functional configuration illustrated in FIG. 9 is only an example. As long as the operation according to the embodiment of the present invention can be executed, the functions may be divided in any way, and the functional units may be given any names.

The transmitting unit 110 includes a function of generating signals to be transmitted to the user equipment 20 and wirelessly transmitting the signals. The receiving unit 120 includes a function of receiving various types of signals transmitted from the user equipment 20 and acquiring, for example, information on a higher layer from the received signals. Further, the transmitting unit 110 has a function of transmitting NR-PSS, NR-SSS, NR-PBCH, a DL/UL control signal, a DL reference signal or the like to the user equipment 20.

The configuring unit 130 stores configuration information configured in advance and various configuration information to be transmitted to the user equipment 20 in a storage device and reads out the configuration information from the storage device as needed. The contents of the configuration information are, for example, configuration about random access, and the like.

As explained in the embodiment, the control unit 140 executes 2-step random access procedure or 4-step random access procedure with the user equipment 20. A functional unit configured to transmit signals in the control unit 140 may be included in the transmitting unit 110, and a functional unit configured to receive signals in the control unit 140 may be included in the receiving unit 120.

### <User equipment 20>

FIG. 10 is a drawing illustrating an example of a functional configuration of the user equipment 20. As illustrated in FIG. 10, the user equipment 20 includes a transmitting unit 210, a receiving unit 220, a configuring unit 230, and a control unit 240. The functional configuration illustrated in FIG. 10 is merely an example. As long as the operation according to the embodiment of the present invention can be executed, the functions may be divided in any way, and the function units may be given any names.

The transmitting unit 210 generates a transmission signal from transmission data and wirelessly transmits the transmission signal. The receiving unit 220 wirelessly receives various types of signals, and acquires a signal in a higher-layer from the received signal in the physical layer. Also, the receiving unit 220 has a function of receiving NR-PSS, NR-SSS, NR-PBCH, DL/UL/SL control signals, reference signals, and the like that are transmitted from the base station apparatus 10. Also, for example, in D2D communication, the transmitting unit 210 transmits, to another user equipment 20, a PSCCH (Physical Sidelink Control Channel), a PSSCH (Physical Sidelink Shared Channel), a PSDCH (Physical Sidelink Discovery Channel), a PSBCH (Physical Sidelink Broadcast Channel), and the like. The receiving unit 120 receives the PSCCH, the PSSCH, the PSDCH, the PSBCH, and the like, from the another user equipment 20.

The configuring unit 230 stores in a storage device various types of configuration information received from the base station apparatus 10 or the user equipment 20 by the receiving unit 220 and reads out the configuration information from the storage device as needed. The configuring unit 230 also stores configuration information configured in advance. The contents of the configuration information are, for example, configuration about random access, and the like.

As explained in the embodiment, the control unit 240 executes 2-step random access procedure or 4-step random access procedure with the base station apparatus 10. A functional unit configured to transmit signals in the control unit 240 may be included in the transmitting unit 210, and a functional unit configured to receive signals in the control unit 240 may be included in the receiving unit 220.

### <Hardware configuration>

The block diagrams (FIGs. 9 and 10) used for explaining the above embodiments illustrate blocks in units of functions. These functional blocks (constituting units) are implemented by any combinations of at least one of hardware and software. In this regard, a method for implementing the various functional blocks is not particularly limited. That is, each functional block may be implemented by one device united physically and logically. Alternatively, each functional block may be implemented by connecting directly or indirectly (for example, in a wired or wireless manner) two or more devices that are physically or logically separated and connected together and using these multiple devices. The functional block may be implemented by combining software with the single device or multiple devices.

Functions include, but are not limited to, determining, calculating, processing, deriving, investigating, searching, confirming, receiving, transmitting, outputting, accessing, resolving, selecting, establishing, comparing, assuming, expecting, considering, broadcasting, notifying, communicating, forwarding, configuring, reconfiguring, allocating, mapping, assigning, and the like. For example, a functional block (constituting unit) that has a function of transmitting is referred to as a transmitting unit or a transmitter. As described above, a method for implementing these functions is not particularly limited.

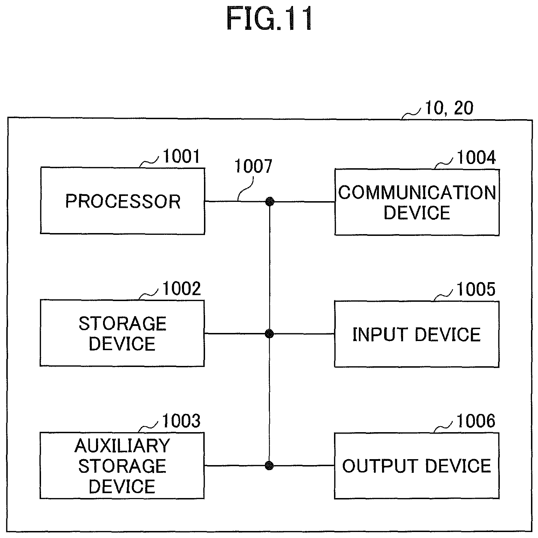

For example, the base station apparatus 10, the user equipment 20, and the like according to one embodiment of the present disclosure may function as a computer that performs processing of a wireless communication according to the present disclosure. FIG. 11 is a drawing illustrating an example of a hardware configuration of the base station apparatus 10 or the user equipment 20 according to an embodiment of the present disclosure. Each of the base station apparatus 10 and user equipment 20 may be physically configured as a computer device including a processor 1001, a storage device 1002, an auxiliary storage device 1003, a communication device 1004, an input device 1005, an output device 1006, a bus 1007, and the like.

It is noted that, in the following description, the term "device" may be read as a circuit, an apparatus, a unit, or the like. The hardware configurations of the base station apparatus 10 and the user equipment 20 may be configured to include one or more of the devices illustrated in drawings, or may be configured not to include some of the devices.

Each function of the base station apparatus 10 and the user equipment 20 may be implemented by reading predetermined software (program) to hardware such as the processor 1001, the storage device 1002, or the like, causing the processor 1001 to perform operations, controlling communication by the communication device 1004, and controlling at least one of reading and writing of data in the storage device 1002 and the auxiliary storage device 1003.

The processor 1001 executes, for example, an operating system to control the overall operation of the computer. The processor 1001 may be a central processing unit (CPU) including an interface with peripheral devices, a control device, an arithmetic device, a register, and the like. For example, the control unit 140, the control unit 240, and the like described above may be realized by the processor 1001.

The processor 1001 reads a program (program code), a software module, or data from at least one of the auxiliary storage device 1003 and the communication device 1004 onto the storage device 1002, and performs various processes according to the program, the software module, or the data. As the program, a program that causes a computer to perform at least some of the operations described in the embodiment explained above is used. For example, the control unit 140 of the base station apparatus 10, as illustrated in FIG. 9 may be implemented by a control program that is stored in the storage device 1002 and that is executed by the processor 1001. Also, for example, the control unit 240 of the user equipment 20, as illustrated in FIG. 10, may be implemented by a control program that is stored in the storage device 1002 and that is executed by the processor 1001. Explanation has been provided above for the case in which the above various processing are performed by the single processor 1001. However, such processing may be simultaneously or sequentially performed by two or more processors 1001. The processor 1001 may be implemented with one or more chips. It is noted that the program may be transmitted from a network through an electronic communication line.

The storage device 1002 is a computer-readable recording medium and may be constituted by at least one of, for example, a ROM (Read Only Memory), an EPROM (Erasable Programmable ROM), an EEPROM (Electrically Erasable Programmable ROM), a RAM (Random Access Memory), and the like. The storage device 1002 may also be referred to as a register, a cache, a main memory (main storage device), or the like. The storage device 1002 can store a program (program code), a software module and the like that can be executed to perform a communication method according to an embodiment of the present disclosure.

The auxiliary storage device 1003 is a computer-readable recording medium and may be configured by at least one of, for example, an optical disk such as a CD-ROM (Compact Disc ROM), a hard disk drive, a flexible disk, a magneto-optical disk (for example, a compact disk, a digital versatile disk, or a Blu-ray (registered trademark) disk), a smart card, a flash memory (for example, a card, a stick, or a key drive), a floppy (registered trademark) disk, a magnetic strip, and the like.
The above storage medium may be, for example, a database, a server, or other appropriate media including at least one of the storage device 1002 and the auxiliary storage device 1003.

The communication device 1004 is hardware (a transmission and reception device) for performing communication between computers through at least one of a wired and wireless networks and may also be referred to as, for example, a network device, a network controller, a network card, a communication module, or the like. The communication device 1004 may include, for example, a radio frequency switch, a duplexer, a filter, a frequency synthesizer, or the like to implement at least one of a frequency division duplex (FDD) and a time division duplex (TDD). For example, a transmission and reception antenna, an amplifier, a transmitting and receiving unit, a transmission line interface, and the like may be implemented by the communication device 1004. The transmitting and receiving unit may be implemented in such a manner that a transmitting unit and a receiving unit are physically or logically separated.

The input device 1005 is an input device (for example, a keyboard, a mouse, a microphone, a switch, a button, a sensor, or the like) that receives an input from the outside. The output device 1006 is an output device (for example, a display, a speaker, an LED lamp, or the like) that performs an output to the outside. It is noted that the input device 1005 and the output device 1006 may be integrated with each other (for example, a touch panel).

The devices, such as the processor 1001 and the storage device 1002, are connected to each other via a bus 1007 for communicating information. The bus 1007 may be constituted by using a single bus, or may be constituted by using busses different depending on devices.

The base station apparatus 10 and the user equipment 20 may include hardware, such as a microprocessor, a digital signal processor (DSP), an ASIC (Application Specific Integrated Circuit), a PLD (Programmable Logic Device), or an FPGA (Field Programmable Gate Array), or alternatively, some or all of the functional blocks may be implemented by the hardware. For example, the processor 1001 may be implemented with at least one of these hardware components.

### <Summary of Embodiment>

As described above, according to an embodiment of the present invention, provided is a user equipment including a transmitting unit configured to transmit signals required for a first random access procedure and a second random access procedure, a receiving unit configured to receive signals required for the first random access procedure and the second random access procedure, and a control unit configured to switch the first random access procedure and the second random access procedure according to a predetermined switch trigger, wherein the first random access procedure and the second random access procedure are different in a number of steps required to complete a random access procedure.

According to the above configuration, the user equipment 20 can fall back from the 2-step random access procedure to the 4-step random access procedure based on the configured trigger. Also, the user equipment 20 can transit from the 4-step random access procedure to the 2-step random access procedure based on the configured trigger. Accordingly, the random access procedure can be completed in a shorter time by executing the random access procedure according to a communication situation. More specifically, a suitable random access procedure can be executed according to a situation.

The first random access procedure may be a 2-step random access procedure, and the second random access procedure may be a 4-step random access procedure. According to the above configuration, the user equipment 20 can switch the 2-step random access procedure and the 4-step random access procedure to improve a rate of success of random access procedure.

The predetermined switch trigger for switching from the first random access procedure to the second random access procedure may be a detection of a failure of the first random access procedure. According to the above configuration, in a case where the user equipment 20 fails in the 2-step random access procedure, the user equipment 20 can switch to the 4-step random access procedure to improve a rate of success of random access procedure.

The predetermined switch trigger for switching from the first random access procedure to the second random access procedure may be a detection of a failure of the first random access procedure and a reception of information including a switch instruction of the random access procedure from the base station apparatus during the first random access procedure. According to the above configuration, in a case where the user equipment 20 fails in the 2-step random access procedure, the user equipment 20 can switch to the 4-step random access procedure to improve a rate of success of random access procedure.

The predetermined switch trigger for switching from the first random access procedure to the second random access procedure may be a case where a radio quality is degraded. According to the above configuration, in a case where the radio quality is degraded, the user equipment 20 can switch to the 4-step random access procedure to improve a rate of success of random access procedure.

The predetermined switch trigger for switching from the second random access procedure to the first random access procedure may be an occurrence of a particular uplink data. According to the above configuration, in a case where high priority UL data occurs, the user equipment 20 can switch to the 2-step random access procedure to shorten a time it takes to complete the random access procedure.

According to an embodiment of the present invention, provided is a base station apparatus, including a receiving unit configured to receive signals required for a first random access procedure and a second random access procedure, a transmitting unit configured to transmit signals required for the first random access procedure and the second random access procedure, and a control unit configured to switch the first random access procedure and the second random access procedure according to a predetermined switch trigger, wherein the first random access procedure and the second random access procedure are different in a number of steps required to complete a random access procedure.

According to the above configuration, the user equipment 20 can fall back from the 2-step random access procedure to the 4-step random access procedure based on the configured trigger. Also, the user equipment 20 can transition from the 4-step random access procedure to the 2-step random access procedure based on the configured trigger. Accordingly, the random access procedure can be completed in a shorter time by executing the random access procedure according to a communication situation. More specifically, a suitable random access procedure can be executed according to a situation.

### <Supplements to Embodiment>

The embodiment of the present invention has been described above, but the disclosed invention is not limited to the above embodiment, and those skilled in the art would understand that various modified examples, revised examples, alternative examples, substitution examples, and the like can be made. In order to facilitate understanding of the present invention, specific numerical value examples are used for explanation, but the numerical values are merely examples, and any suitable values may be used unless otherwise stated. Classifications of items in the above description are not essential to the present invention, contents described in two or more items may be used in combination if necessary, and contents described in an item may be applied to contents described in another item (unless a contradiction arises). The boundaries between the functional units or the processing units in the functional block diagrams do not necessarily correspond to the boundaries of physical components. Operations of a plurality of functional units may be physically implemented by a single component and an operation of a single functional unit may be physically implemented by a plurality of components. Concerning the processing procedures described above in the embodiments, the orders of steps may be changed unless a contradiction arises. For the sake of convenience for describing the processing, the base station apparatus 10 and the user equipment 20 have been described with the use of the functional block diagrams, but these apparatuses may be implemented by hardware, software, or a combination thereof. Each of software functioning with a processor of the base station apparatus 10 according to the embodiment of the present invention and software functioning with a processor of the user equipment 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any suitable recording media.

Also, the indication of information is not limited to the aspect or embodiment described in the present disclosure, but may be performed by other methods. For example, the indication of information may be performed by physical layer signaling (for example, DCI (Downlink Control Information), UCI (Uplink Control Information)), higher layer signaling (for example, RRC (Radio Resource Control) signaling, MAC (Medium Access Control) signaling, broadcast information (an MIB (Master Information Block) and an SIB (System Information Block)), other signals, or combinations thereof. The RRC signaling may be also be referred to as an RRC message and may be, for example, an RRC connection setup message, an RRC connection reconfiguration message, or the like.

Each aspect and embodiment described in the present disclosure may be applied to at least one of a system that uses a suitable system such as LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), or Bluetooth (registered trademark), and a next-generation system expanded on the basis thereof. Also a plurality of systems may be combined and applied (for example, a combination of at least one of LTE and LTE-A with 5G, and the like).

In the operation procedures, sequences, flowcharts, and the like according to each aspect and embodiment described in the present disclosure, the orders of steps may be changed unless a contradiction arises. For example, in the methods described in the present disclosure, elements of various steps are illustrated by using an exemplary order and the methods are not limited to the specific orders presented.

The specific operations performed by the base station apparatus 10 described in the present disclosure may in some cases be performed by an upper node. It is clear that, in a network that includes one or more network nodes including the base station apparatus 10, various operations performed for communication with the user equipment 20 can be performed by at least one of the base station apparatus 10 and another network node other than the base station apparatus 10 (for example, a MME, a S-GW, or the like may be mentioned, but not limited thereto). In the above, the description has been made for the case where another network node other than the base station apparatus 10 is a single node as an example. But the another network node may be a combination of a plurality of other network nodes (for example, a MME and a S-GW).

Information, signals, or the like described in the present disclosure may be output from a higher layer (or a lower layer) to a lower layer (or a higher layer). Information, signals, or the like described in the present disclosure may be input and output via a plurality of network nodes.

Information or the like that has been input or output may be stored at a predetermined place (for example, a memory) and may be managed with the use of a management table. Information or the like that is input or output can be overwritten, updated, or appended. Information or the like that has been output may be deleted. Information or the like that has been input may be transmitted to another apparatus.

In the present disclosure, determination may be made with the use of a value expressed by one bit (0 or 1), may be made with the use of a Boolean value (true or false), and may be made through a comparison of numerical values (for example, a comparison with a predetermined value).

Regardless of whether software is referred to as software, firmware, middleware, microcode, a hardware description language, or another name, software should be interpreted broadly to mean instructions, instruction sets, codes, code segments, program codes, a program, a sub-program, a software module, an application, a software application, a software package, a routine, a subroutine, an object, an executable file, an execution thread, a procedure, a function, and the like.

Software, instructions, information, or the like may be transmitted and received through transmission media. For example, in a case where software is transmitted from a website, a server or another remote source through at least one of wired technology (such as a coaxial cable, an optical-fiber cable, a twisted pair, or a digital subscriber line (DSL)) and radio technology (such as infrared or microwaves), at least one of the wired technology and the radio technology is included in the definition of a transmission medium.

Information, signals, and the like described in the present disclosure may be expressed with the use of any one of various different technologies. For example, data, instructions, commands, information, signals, bits, symbols, chips, and the like mentioned herein throughout the above explanation may be expressed by voltages, currents, electromagnetic waves, magnetic fields or magnetic particles, optical fields or photons, or any combinations thereof.

The terms described in the present disclosure and the terms necessary for understanding the present disclosure may be replaced with terms having the same or similar meanings. For example, at least one of a channel and a symbol may be a signal (signaling). A signal may be a message. A component carrier (CC) may be referred to as a carrier frequency, a cell, a frequency carrier, or the like.

The terms "system" and "network" used in the present disclosure are used interchangeably.

Information, parameters, and the like described in the present disclosure may be expressed by absolute values, may be expressed by relative values with respect to predetermined values, and may be expressed by corresponding different information. For example, radio resources may be indicated by indexes.

The above-described names used for the parameters are not restrictive in any respect. In addition, formulas or the like using these parameters may be different from those explicitly disclosed in the present disclosure. Various channels (for example, a PUCCH, a PDCCH, and the like) and information elements can be identified by any suitable names, and therefore, various names given to these various channels and information elements are not restrictive in any respect.

In the present disclosure, terms such as "base station (BS)", "radio base station", "base station apparatus", "fixed station", "NodeB", "eNodeB (eNB)", "gNodeB (gNB)", "access point", "transmission point", "reception point", "transmission/reception point", "cell", "sector", "cell group", "carrier", "component carrier", and the like may be used interchangeably. A base station may be referred to as a macro-cell, a small cell, a femtocell, a pico-cell, or the like.

A base station can accommodate one or a plurality of (for example, three) cells (that may be called sectors). In a case where a base station accommodates a plurality of cells, the whole coverage area of the base station can be divided into a plurality of smaller areas. For each smaller area, a base station subsystem (for example, an indoor miniature base station RRH (Remote Radio Head)) can provide a communication service. The term "cell" or "sector" denotes all or a part of the coverage area of at least one of a base station and a base station subsystem that provides communication services in the coverage.

In the present disclosure, terms such as "mobile station (MS)", "user terminal", "user equipment (UE)", and "terminal" may be used interchangeably.

By the person skilled in the art, a mobile station may be referred to as any one of a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, and other suitable terms.

At least one of a base station and a mobile station may be referred to as a transmitting apparatus, a receiving apparatus, a communication apparatus, or the like. At least one of a base station and a mobile station may be an apparatus mounted on a mobile body, or may be a mobile body itself, or the like. A mobile body may be a transporting device (e.g., a vehicle, an airplane, and the like), an unmanned mobile (e.g., a drone, an automated vehicle, and the like), or a robot (of a manned or unmanned type). It is noted that at least one of a base station and a mobile station includes an apparatus that does not necessarily move during a communication operation. For example, at least one of a base station and a mobile station may be an IoT (Internet of Thing) device such as a sensor.

In addition, a base station according to the present disclosure may be read as a user terminal. For example, each aspect or embodiment of the present disclosure may be applied to a configuration in which communication between a base station and a user terminal is replaced by communication between a plurality of user equipments 20 (that may be called D2D (Device-to-Device), V2X (Vehicle-to-Everything), or the like). In this case, a user equipment 20 may have above-described functions of the base station apparatus 10. In this regard, a word such as "up" or "down" may be read as a word corresponding to communication between terminals (for example, "side"). For example, an uplink channel, a downlink channel, or the like may be read as a side channel.

Similarly, a user terminal according to the present disclosure may be replaced with a base station. In this case, a base station may have above-described functions of the user terminal.

The terms "determine" used herein may mean various operations. For example, judging, calculating, computing, processing, deriving, investigating, looking up, searching, inquiring (for example, looking up a table, a database, or another data structure), ascertaining, or the like may be deemed as making determination. Also, receiving (for example, receiving information), transmitting (for example, transmitting information), inputting, outputting, or accessing (for example, accessing data in a memory), or the like may be deemed as making determination. Also, resolving, selecting, choosing, establishing, comparing, or the like may be deemed as making determination. That is, doing a certain operation may be deemed as making determination. "To determine" may be read as "to assume", "to expect", "to consider", or the like.

Each of the terms "connected" and "coupled" and any variations thereof mean any connection or coupling among two or more elements directly or indirectly and can mean that one or a plurality of intermediate elements are inserted among two or more elements that are "connected" or "coupled" together. Coupling or connecting among elements may be physical one, may be logical one, and may be a combination thereof. For example, "connecting" may be read as "accessing". In a case where the terms "connected" and "coupled" and any variations thereof are used in the present disclosure, it may be considered that two elements are "connected" or "coupled" together with the use of at least one type of a medium from among one or a plurality of wires, cables, and printed conductive traces, and in addition, as some non-limiting and non-inclusive examples, it may be considered that two elements are "connected" or "coupled" together with the use of electromagnetic energy such as electromagnetic energy having a wavelength of the radio frequency range, the microwave range, or the light range (including both of the visible light range and the invisible light range).

A reference signal can be abbreviated as an RS (Reference Signal). A reference signal may be referred to as a pilot depending on an applied standard.

A term "based on" used in the present disclosure does not mean "based on only" unless otherwise specifically noted. In other words, a term "base on" means both "based on only" and "based on at least".

Any references to elements denoted by a name including terms such as "first" or "second" used in the present disclosure do not generally limit the amount or the order of these elements. These terms can be used in the present disclosure as a convenient method for distinguishing one or a plurality of elements. Therefore, references to first and second elements do not mean that only the two elements can be employed or that the first element should be, in some way, prior to the second element.

"Means" in each of the above apparatuses may be replaced with "unit", "circuit", "device", or the like.

In a case where any one of "include", "including", and variations thereof is used in the present disclosure, each of these terms is intended to be inclusive in the same way as the term "comprising". Further, the term "or" used in the present disclosure is intended to be not exclusive- or.

A radio frame may include, in terms of time domain, one or a plurality of frames. Each of one or a plurality of frames may be referred to as a subframe in terms of time domain. A subframe may include, in terms of time domain, one or a plurality of slots. A subframe may have a fixed time length (e.g., 1 ms) independent of Numerology.

Numerology may be a communication parameter that is applied to at least one of transmission and reception of a signal or a channel. Numerology may mean, for example, at least one of a subcarrier spacing (SCS), a bandwidth, a symbol length, a cyclic prefix length, a transmission time interval (TTI), the number of symbols per TTI, a radio frame configuration, a specific filtering processing performed by a transceiver in frequency domain, a specific windowing processing performed by a transceiver in time domain, and the like.

A slot may include, in terms of time domain, one or a plurality of symbols (OFDM (Orthogonal Frequency Division Multiplexing) symbols, SC-FDMA (Single Carrier Frequency Division Multiplexing) symbols) symbols, or the like). A slot may be a time unit based on Numerology.

A slot may include a plurality of minislots. Each minislot may include one or a plurality of symbols in terms of the time domain. A minislot may also be referred to as a subslot. A minislot may include fewer symbols than a slot. A PDSCH (or PUSCH) transmitted at a time unit greater than a minislot may be referred to as a PDSCH (or PUSCH) mapping type A. A PDSCH (or PUSCH) transmitted using minislots may be referred to as a PDSCH (or PUSCH) mapping type B.

Each of a radio frame, a subframe, a slot, a minislot, and a symbol means a time unit configured to transmit a signal. Each of a radio frame, a subframe, a slot, a minislot, and a symbol may be referred to as other names respectively corresponding thereto.

For example, one subframe may be referred to as a transmission time interval (TTI), a plurality of consecutive subframes may be referred to as a TTI, and one slot or one minislot may be referred to as a TTI. That is, at least one of a subframe and a TTI may be a subframe (1 ms) according to the existing LTE, may have a period shorter than 1 ms (e.g., 1 to 13 symbols), and may have a period longer than 1 ms. Instead of subframes, units expressing a TTI may be referred to as slots, minislots, or the like.

A TTI means, for example, a minimum time unit of scheduling in radio communication. For example, in an LTE system, a base station performs scheduling for each user equipment 20 to allocate, in TTI units, radio resources (such as frequency bandwidths, transmission power, and the like that can be used by each user equipment 20). However, the definition of a TTI is not limited thereto.

A TTI may be a transmission time unit for channel-coded data packets (transport blocks), code blocks, code words, or the like, and may be a unit of processing such as scheduling, link adaptation, or the like. When a TTI is given, an actual time interval (e.g., the number of symbols) to which transport blocks, code blocks, code words, or the like are mapped may be shorter than the given TTI.

In a case where one slot or one minislot is referred to as a TTI, one or a plurality of TTIs (i.e., one or a plurality of slots or one or a plurality of minislots) may be a minimum time unit of scheduling. The number of slots (the number of minislots) included in the minimum time unit of scheduling may be controlled.

A TTI having a time length of 1 ms may referred to as an ordinary TTI (a TTI according to LTE Rel.8-12), a normal TTI, a long TTI, an ordinary subframe, a normal subframe, a long subframe, a slot, or the like. A TTI shorter than an ordinary TTI may be referred to as a shortened TTI, a short TTI, a partial or fractional TTI, a shortened subframe, a short subframe, a minislot, a subslot, a slot, or the like.

Note that a long TTI (for example, normal TTI, subframe, and the like) may be read as TTI having a time length exceeding 1 ms, and a short TTI (for example, shortened TTI) may be read as a TTI having a TTI length less than the TTI length of the long TTI and equal to or more than 1 ms.

A resource block (RB) is a resource allocation unit in terms of time domain and frequency domain and may include one or a plurality of consecutive subcarriers in terms of frequency domain. The number of subcarriers included in an RB may be the same regardless of Numerology, and, for example, may be 12. The number of subcarriers included in a RB may be determined based on Numerology.

In terms of time domain, an RB may include one or a plurality of symbols, and may have a length of 1 minislot, 1 subframe, or 1 TTI. Each of 1 TTI, 1 subframe, and the like may include one or a plurality of resource blocks.

One or a plurality of RBs may be referred to as physical resource blocks (PRBs: Physical RBs), a subcarrier group (SCG: Sub-Carrier Group), a resource element group (REG: Resource Element Group), a PRB pair, an RB pair, or the like.

A resource block may include one or a plurality of resource elements (RE: Resource Elements). For example, 1 RE may be a radio resource area of 1 subcarrier and 1 symbol.

A bandwidth part (BWP) (which may be called a partial bandwidth or the like) may mean a subset of consecutive common RBs (common resource blocks) for Numerology, in any given carrier. A common RB may be identified by a RB index with respect to a common reference point in the carrier. PRBs may be defined by a BWP and may be numbered in the BWP.

A BWP may include a BWP (UL BWP) for UL and a BWP (DL BWP) for DL. For a UE, one or a plurality of BWPs may be set in 1 carrier.

At least one of BWPs that have been set may be active, and a UE need not assume sending or receiving a predetermined signal or channel outside the active BWP. A "cell", a "carrier" or the like in the present disclosure may be read as a "BWP".

The above-described structures of radio frames, subframes, slots, minislots, symbols, and the like are merely examples. For example, the number of subframes included in a radio frame, the number of slots included in a subframe or a radio frame, the number of minislots included in a slot, the number of symbols and the number of RBs included in a slot or a minislot, the number of subcarriers included in an RB, the number of symbols included in a TTI, a symbol length, a cyclic prefix (CP) length, and the like can be variously changed.

Throughout the present disclosure, in a case where an article such as "a", "an", or "the" in English is added through a translation, the present disclosure may include a case where a noun following such article is of a plural forms.

Throughout the present disclosure, an expression that "A and B are different" may mean that "A and B are different from each other". Also this term may mean that "each of A and B is different from C". Terms such as "separate" and "coupled" may also be interpreted in a manner similar to "different".

Each aspect or embodiment described in the present disclosure may be solely used, may be used in combination with another embodiment, and may be used in a manner of being switched with another embodiment upon implementation. Indication of predetermined information (for example, indication of "being x") may be implemented not only explicitly but also implicitly (for example, by not indicating predetermined information).

In the present disclosure, the 2-step random access procedure is an example of a first random access procedure. The 4-step random access procedure is an example of a second random access procedure.

### Reference Signs List

- 10: base station apparatus
- 110: transmitting unit
- 120: receiving unit
- 130: configuring unit
- 140: control unit
- 20: user equipment
- 210: transmitting unit
- 220: receiving unit
- 230: configuring unit
- 240: control unit
- 1001: processor
- 1002: storage device
- 1003: auxiliary storage device
- 1004: communication apparatus
- 1005: input device
- 1006: output device

## Claims

1. A terminal (20) comprising:
a transmission unit (110) configured to transmit, to a base station (10), a first message (MsgA) including a random access preamble and information identifying the terminal (20) in a two-step random access procedure;
a receiving unit (120) configured to receive, from the base station (10), a second message (MsgB) including an instruction to switch to a four-step random access procedure; and
a control unit (140) configured to acquire, from the information identifying the terminal (20) included in the first message (MsgA), a MAC PDU, Medium Access Control Protocol Data Unit, used to transmit a third message (Msg3), after switching to the 4-step random access procedure, wherein
the transmission unit (110) is configured to transmit, to the base station (10), the third message (Msg3) including the MAC PDU using resources specified by the second message (MsgB) .

2. A system comprising:
a terminal (20) configured to transmit, to a base station (10), a first message (MsgA) including a random access preamble and information identifying the terminal (20) in a two-step random access procedure; and
a base station (10) configured to transmit, to the terminal (20), a second message (MsgB) including an instruction to switch to a four-step random access procedure, wherein
the terminal (20) is configured to acquire, from the information identifying the terminal (20) included in the first message (MsgA), a MAC PDU, Medium Access Control Protocol Data Unit, used to transmit a third message (Msg3), after switching to the 4-step random access procedure, and
the terminal (20) is configured to transmit, to the base station (10), the third message (Msg3) including the MAC PDU using resources specified by the second message (MsgB).

3. A communication method performed by a terminal (20) comprising:
transmitting, to a base station (10), a first message (MsgA) including a random access preamble and information identifying the terminal (20) in a two-step random access procedure;
receiving, from the base station (10), a second message (MsgB) including an instruction to switch to a four-step random access procedure; and
acquiring, from the information identifying the terminal (20) included in the first message (MsgA), a MAC PDU, Medium Access Control Protocol Data Unit, used to transmit a third message (Msg3), after switching to the 4-step random access procedure, wherein
the transmitting transmits, to the base station (10), the third message (Msg3) including the MAC PDU using resources specified by the second message (MsgB).

## Patentansprüche

1. Endgerät (20), umfassend:
eine Sendeeinheit (110), die so konfiguriert ist, dass sie in einem zweistufigen Zufallszugriffsverfahren eine erste Nachricht (MsgA) einschließlich einer Zufallszugriffspräambel und Informationen, die das Endgerät (20) identifizieren, an eine Basisstation (10) sendet;
eine Empfangseinheit (120), die so konfiguriert ist, dass sie von der Basisstation (10) eine zweite Nachricht (MsgB) einschließlich einer Anweisung zum Umschalten zu einem vierstufigen Zufallszugriffsverfahren empfängt; und
eine Steuerungseinheit (140), die so konfiguriert ist, dass sie aus den Informationen, die das Endgerät (20) identifizieren und in der ersten Nachricht (MsgA) eingeschlossen sind, eine MAC-PDU, Medium-Access-Control-Protocol-Data-Unit erfasst, die verwendet wird, um eine dritte Nachricht (Msg3) zu senden, nachdem auf das vierstufige Zufallszugriffsverfahren umgeschaltet wurde, wobei
die Sendeeinheit (110) so konfiguriert ist, dass sie die dritte Nachricht (Msg3) einschließlich der MAC-PDU unter Verwendung der durch die zweite Nachricht (MsgB) angegebenen Ressourcen an die Basisstation (10) sendet.

2. System, umfassend:
ein Endgerät (20), das so konfiguriert ist, dass es in einem zweistufigen Zufallszugriffsverfahren eine erste Nachricht (MsgA) einschließlich einer Zufallszugriffspräambel und Informationen an eine Basisstation (10) sendet, die das Endgerät (20) identifizieren; und
eine Basisstation (10), die so konfiguriert ist, dass sie eine zweite Nachricht (MsgB) einschließlich einer Anweisung zum Umschalten zu einem vierstufigen Zufallszugriffsverfahren an das Endgerät (20) sendet, wobei
das Endgerät (20) so konfiguriert ist, dass es aus der das Endgerät (20) identifizierenden Informationen, die in der ersten Nachricht (MsgA) enthalten sind, eine MAC-PDU, Medium-Access-Control-Protocol-Data-Unit, die zur Übertragung einer dritten Nachricht (Msg3) verwendet wird, nach dem Umschalten auf das vierstufige Zufallszugriffsverfahren erfasst, und
das Endgerät (20) so konfiguriert ist, dass es die dritte Nachricht (Msg3) einschließlich der MAC-PDU unter Verwendung der durch die zweite Nachricht (MsgB) angegebenen Ressourcen an die Basisstation (10) sendet.

3. Kommunikationsverfahren, das von einem Endgerät (20) durchgeführt wird, umfassend:
Senden, in einem zweistufigen Zufallszugriffsverfahren, einer ersten Nachricht (MsgA) an eine Basisstation (10), einschließlich einer Zufallszugriffspräambel und Informationen, die das Endgerät (20) identifizieren;
Empfangen, von der Basisstation (10), einer zweiten Nachricht (MsgB) einschließlich einer Anweisung zum Umschalten zu einem vierstufigen Zufallszugriffsverfahren; und
Erfassen, aus den Informationen, die das Endgerät (20) identifizieren und in der ersten Nachricht (MsgA) eingeschlossen sind, einer MAC-PDU, Medium-Access-Control-Protocol-Data-Unit, die zum Senden einer dritten Nachricht (Msg3) verwendet wird, nachdem auf das vierstufige Zufallszugriffsverfahren umgeschaltet wurde, wobei
wobei die Sendeeinheit die dritte Nachricht (Msg3) einschließlich der MAC-PDU unter Verwendung der durch die zweite Nachricht (MsgB) angegebenen Ressourcen an die Basisstation (10) sendet.

## Revendications

1. Terminal (20) comprenant :
une unité (110) de transmission configurée pour transmettre, à une station (10) de base, un premier message (MsgA) incluant un préambule d'accès aléatoire et des informations identifiant le terminal (20) dans une procédure d'accès aléatoire en deux étapes ;
une unité (120) de réception configurée pour recevoir, à partir de la station (10) de base, un deuxième message (MsgB) incluant une instruction de passage à une procédure d'accès aléatoire en quatre étapes ; et
une unité (140) de commande configurée pour acquérir, à partir des informations identifiant le terminal (20) incluses dans le premier message (MsgA), une PDU MAC, unité de données de protocole commande d'accès au support, utilisée pour transmettre un troisième message (Msg3), après passage à la procédure d'accès aléatoire en quatre étapes, dans lequel
l'unité (110) de transmission d'émission est configurée pour transmettre, à la station (10) de base, le troisième message (Msg3) incluant la PDU MAC utilisant les ressources spécifiées par le deuxième message (MsgB).

2. Système comprenant :
un terminal (20) configuré pour transmettre, à une station (10) de base, un premier message (MsgA) incluant un préambule d'accès aléatoire et des informations identifiant le terminal (20) dans une procédure d'accès aléatoire en deux étapes ; et
une station (10) de base configurée pour transmettre, au terminal (20), un deuxième message (MsgB) incluant une instruction de passage à une procédure d'accès aléatoire en quatre étapes, dans lequel
le terminal (20) est configuré pour acquérir, à partir des informations identifiant le terminal (20) incluses dans le premier message (MsgA), une PDU MAC, unité de données de protocole d'accès au support,
utilisée pour transmettre un troisième message (Msg3), après passage à la procédure d'accès aléatoire en quatre étapes, et le terminal (20) est configuré pour transmettre, à la station (10) de base, le troisième message (Msg3) incluant la PDU MAC utilisant les ressources spécifiées par le deuxième message (MsgB).

3. Procédé de communication réalisé par un terminal 20) comprenant :
la transmission, vers une station (10) de base, d'un premier message (MsgA) incluant un préambule d'accès aléatoire et des informations identifiant le terminal (20) dans une procédure d'accès aléatoire en deux étapes ;
la réception, à partir de la station (10) de base, d'un deuxième message (MsgB) incluant une instruction de passage à une procédure d'accès aléatoire en quatre étapes ; et
l'acquisition, à partir des informations identifiant le terminal (20) incluses dans le premier message (MsgA), d'une PDU MAC, unité de données de protocole de commande d'accès au support, utilisée pour transmettre un troisième message (Msg3), après passage à la procédure d'accès aléatoire en quatre étapes, dans lequel
le transmetteur transmet, à la station (10) de base, le troisième message (Msg3) incluant la PDU MAC utilisant les ressources spécifiées par le deuxième message (MsgB).
